Europäisches Patentamt

(19) European Patent Office

Office européen des brevets

(11) Publication number: **0 026 003**

**A1**

(12) # EUROPEAN PATENT APPLICATION

(21) Application number: **80105736.5**

(51) Int. Cl.³: **A 01 F 15/10**

(22) Date of filing: **24.09.80**

(30) Priority: **25.09.79 GB 7933216**

(43) Date of publication of application:
**01.04.81 Bulletin 81/13**

(84) Designated Contracting States:
**DE FR GB IT**

(71) Applicant: **BAMFORDS LIMITED**

**Uttoxeter Staffordshire ST14 8JD(GB)**

(72) Inventor: **Clayphan, R.A.F.G.**
**18 Park Crescent**
**Doveridge Derbyshire(GB)**

(72) Inventor: **Hurst, J.A.**
**The Post Office, Checkley**
**Stoke-on-Trent Staffordshire(GB)**

(74) Representative: **Smith, Vernon John et al,**
**FORRESTER & BOEHMERT Widenmayerstrasse 5/IV**
**D-8000 München 22(DE)**

(54) **Crop feed conveyor.**

(57)  A crop feed conveyor of the kind in which crop is propelled lengthwise of a supporting table (6) by means of one or more sets (62) of tines (66) which are disposed above the table and arranged for reciprocatory movement wherein at least one such set of tines includes one or more auxiliary tines (72) which are spaced from the primary tines (66) in the direction of movement thereof so that the primary and secondary tines follow different paths (68, 88).

FIG 2

Croydon Printing Company Ltd.

Title: "Crop Feed Conveyor"

Description of Invention

This invention relates to crop feed conveyors and has been developed primarily for pick-up balers wherein crop is picked up as the baler is advanced and then transferred by a feed conveyor to a baling chamber. However, it is to be understood that the crop feed conveyor in accordance with the invention may be used in agricultural machines other than pick-up balers.

Crop feed conveyors of the kind to which the invention is applicable include a supporting table onto which the crop is delivered and a set of tines disposed above said table and arranged for reciprocatory movement in such a manner as to propel crop lengthwise along the table towards a discharge point, the tines of the set being spaced generally transversely of the table.

The motion of the tines is commonly of an orbital nature so that the tines move downwardly and forwardly into the crop on the table thereby advancing the crop in the desired direction, thereafter the tines move upwardly (desirably whilst still moving forwardly) so as to disengage from the crop, and finally whilst raised above the crop the tines move rearwardly to return to the starting position.

Depending on the length of the table, there may be two or more sets of such tines spaced along the length of the table.

Due to the variable nature and condition of crops which require to be conveyed, the efficiency of such a system is very variable, and it is an object of the present invention to provide a crop feed conveyor with provision for adjustment of the conveying mechanism to compensate for such variations.

According to the invention we provide a crop feed conveyor of the kind including a supporting table onto which the crop is delivered and a set of primary tines disposed above said table and arranged for reciprocatory movement in such a manner as to propel crop lengthwise along the table towards the discharge point wherein one or more auxiliary tines are provided on the set of primary tines, the or each auxiliary tine being disposed in an adjustable or fixed position relative to the primary tines of the set in which position the tip thereof is spaced from the tips of the primary tines.

Most advantageously, the tip of the or each auxiliary tine is spaced from the tips of the primary tines in a direction extending heightwise and/or lengthwise of the table, so that in the use of the conveyor, the tip of said auxiliary tine follows an orbital path which is offset in a direction heightwise and/or lengthwise of the table from that followed by the tips of the primary tines.

The primary tines of the set are normally arranged in a fixed relation to each other and there may be two, three or more such tines in each set fixedly mounted on, or formed integrally with, a common tine carrier in transversely spaced relation. One or more of the primary tines of the set may have provision for mounting thereon one or more of said auxiliary tines, and the or each auxiliary tine is preferably adjustable relative to the associated primary tine in various modes, but alternatively there may be a single fixed position and orientation for the or each auxiliary tine relative to the primary tines of the set.

For example, in the preferred case where the auxiliary tine is adjustable, the auxiliary tine may be attached to a primary tine at any one of a plurality of positions along the length of the latter or at a steplessly adjustable position. The auxiliary tine may be angularly adjustable relative to the length of the primary tine. Further, the auxiliary tine may be adjustable along its own length. Each auxiliary tine may be capable of adjustment in at least two of such modes, and preferably in all three.

The auxiliary tine may also be adjustable transversely of the set tines, for example by means of interchangeable spacers.

Whilst each such auxiliary tine is conveniently attached directly to one of the primary tines, it may alternatively be attached to the tine carrier or other part which carries the primary tines, and preferably the auxiliary tine is releasably secured so as to be capable of being removed entirely when not required.

The auxiliary tines and/or the primary tines may be either rigid or resilient, and may be either rigidly or resiliently mounted. Further, whilst the primary tines are not normally be adjustable relative to each other or to the tine carrier or the like on which they are mounted, one or more of the primary tines may be adjustable in this manner if desired. The auxiliary tines may if desired be straight, or may be curved.

The invention may be utilised in a crop feed conveyor of the kind set out above, comprising a plurality of sets of primary tines spaced lengthwise of the table, each set being disposed above the table and each being arranged for reciprocatory motion in such a manner as to propel crop lengthwise along the table towards the discharge point, one or more such auxiliary tines being provided on each of said sets of primary tines.

The invention will now be described by way of example, with reference to one embodiment as illustrated diagrammatically in the accompanying drawings in which:-

FIGURE 1 is a side elevation of the embodiment;

FIGURE 2 is an enlarged view of part of Figure 1.

The illustrated embodiment of this invention is a crop feed conveyor, comprising a table 6 and a frame 8 extending above the table, crop (not shown) being conveyed over the table in the direction of the arrow A, into a bale chamber 10. For this purpose, the conveyor comprises feeding mechanism comprising first and second feeding devices 12a, 12b, driven by a common drive shaft 18. Each feeding device comprises a gear wheel 14a, 14b secured to the frame in engagement with a bevel gear 20a, 20b of the drive shaft 18, for rotation, said gear wheels 14a and 14b having respective arms 16a, 16b extending radially therefrom.

Each of the feeding devices 12a and 12b comprises a set 62a, 62b respectively, of tines 66a, 66b, herein called "primary tines". Each set 62 comprises a carrier 64, from which the tines extend in parallel, rigid relationship, the tines of each set being spaced apart in a common plane which extends transversely to the direction of crop feed.

Each carrier 64 has attached thereto a bearing which pivots on a crank pin 40 secured to an arm 41, said arm 41 carrying at its upper end a collar 42 which is slidable, against the action of a compression spring 43, on a pivotally-mounted rod 44.

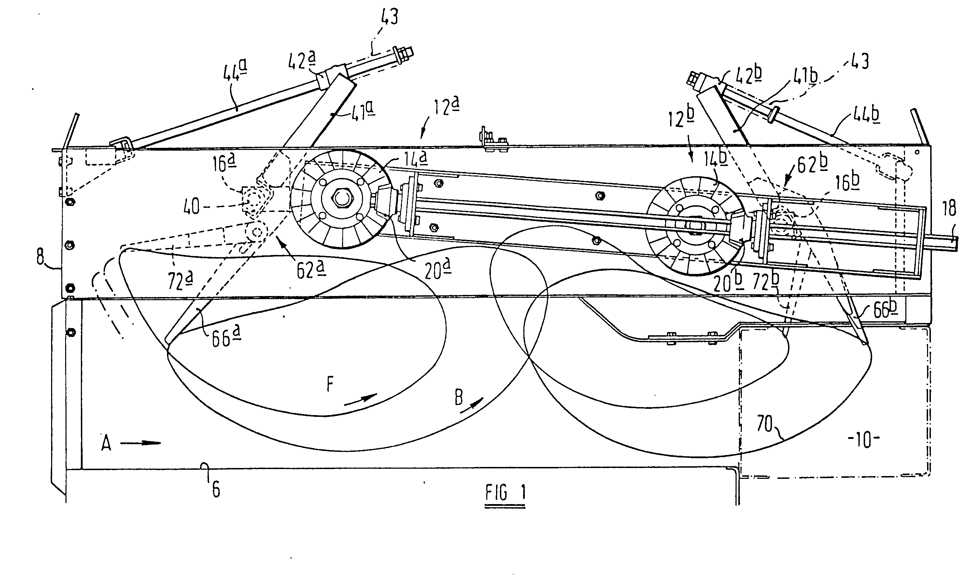

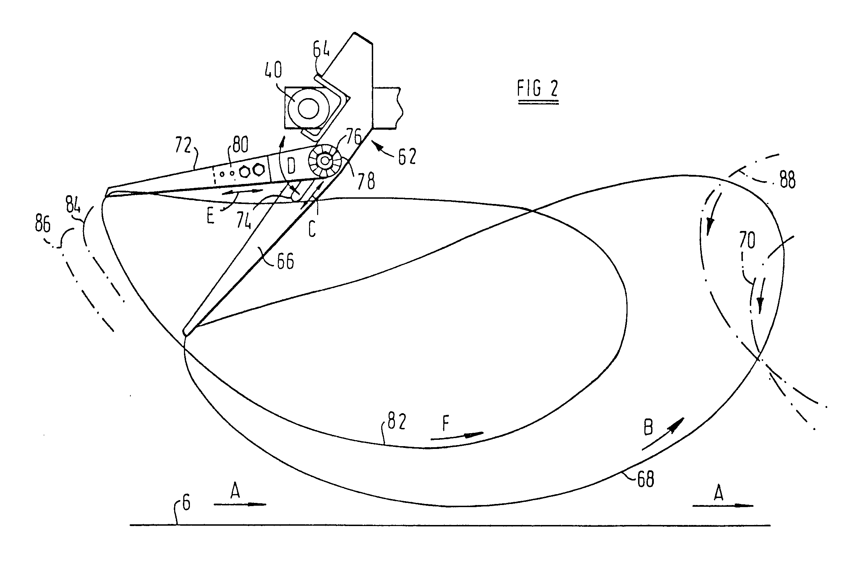

Thus, as the gear wheels 14a and 14b rotate, the sets 62a, 62b are driven in a manner such that the tips of the primary tines of the set 62a follow an orbital path indicated by the line 68, Figure 2 travelling in the direction indicated by the arrow B, whilst the tips of the primary tines of the set 62b follow an orbital path indicated by the line 70. Crop lying on the table 6 is thus engaged as the primary tines 66a of the set 62a descend from the position shown in Figure 1, and advanced in the direction of the arrow A until upward movement of the primary tines 66a subsequently disengage them from the crop, said tines moving upwardly, and returning. Crop is then engaged by the tines 66b of the second set 62b, in a similar manner, and fed into the bale chamber 10.

It is to be appreciated that other types of reciprocating motion of the primary tine sets are known, and may be used. Additionally of course, other types of drive, such as chain and sprocket drives, may be used.

In accordance with the present invention, at least one of the primary tines 66a of the set 62a is provided with an auxiliary tine 72a. For this purpose, the said primary tine 66a is formed with a longitudinal slot 74 which receives a bolt 76 whereby the auxiliary tine 72a may be detachably secured to the said primary tine 66a in a range of positions of longitudinal adjustment as indicated by the arrow 'C'. Alternatively the slot 74 may be replaced by a row of spaced holes. One method of securing the auxiliary tine 72a in position is to employ a serrated washer 78. This also enables the position of the auxiliary tine 72a to be adjusted angularly, as indicated by arrow 'D', relative to said primary tine 66a. Additionally, the auxiliary tine 72a comprises two overlapping parts secured together by means of bolts passing through aligned holes, and such holes are arranged in a row 80 whereby the degree of overlap between the two parts may be adjusted in the direction indicated by arrow E. As can be seen, the tip of the auxiliary tine 72a is spaced from the tip of the said primary tine 66a to which it is secured in a direction transverse to the plane occupied by the primary tines of the set 62a.

In the position of adjustment illustrated, the tip of the auxiliary tine 72a follows an orbital motion indicated by line 82, moving in the direction of arrow 'F'. Since the tip of the auxiliary tine 72a is spaced from the tip of the said primary tine 66a in directions both heightwise and rearwards of the latter relative to the direction of travel of the set 62a, this effectively supplements the motion of the tine 66a. By adjustment of the setting of the auxiliary tine 72a, the relation between its orbital path and that of the said primary tine 66a may be varied, and lines 84 and 86 indicate parts of typical alternative orbits which may readily be established for the auxiliary tine 72a relative to the primary tine 66a.

Additionally, it would be possible to space the auxiliary tine 72a laterally from the said primary tine 66a by means of one or more appropriate spacers so as to enable the orbit of the auxiliary tine 72a to be spaced transversely, by a fixed or variable distance, from the orbit of the said primary tine 66a.

Whilst the auxiliary tine 72a is shown as being attached directly to the primary tine 66a, it will be appreciated that provision could alternatively be made for securing such auxiliary tine directly to the tine carrier 64a, rather than to one of the primary tines 66a carried thereby. Again, whilst the primary tine 66a is shown as having a fixed relation to the tine carrier 64a, it will be appreciated that the primary tine 16 itself could be adjustably mounted on the tine carrier 64a.

The set 62a may be provided with a single auxiliary tine 72a, or two or more or all of the primary tines 66a in the set may be so provided. Where a set of tines is provided with more than one auxiliary tine, it will be understood that the position of adjustment of each auxiliary tine relative to the primary tines may be different, whether the auxiliary tines are secured directly to the primary tines or to the tine carrier. However, wherever the auxiliary tines are secured directly to the tine carrier, they may be constructed as an auxiliary set of tines having a fixed relationship to each other.

Whilst only one such auxiliary tine 72a is illustrated in Figure 2 as being carried by tine 66a, it will be appreciated that it would be possible, if desired, to secure two such auxiliary tines 72a by means of the same bolt 76, or different bolts to the same primary tine 66a on the same or opposite sides thereof.

Although, as illustrated, the auxiliary tine 72a is arranged rearwardly of the primary tine 66a relative to the direction of movement, it is also possible for an auxiliary tine to be arranged forwardly of the primary tine.

Moreover, whilst the illustrated auxiliary tine 72a is adjustable in several different modes relative to the primary tine 66a, it would alternatively be possible for the auxiliary tine to be adjustable in fewer modes or in only one mode. Indeed, it would be possible to employ an auxiliary tine having a single fixed position relative to the primary tine to which it is attached.

Additionally, although the or each auxiliary tine is preferably detachably secured to the primary tines, or to the tine carrier, it is also possible for an auxiliary tine to be non-detachably associated with a primary tine, the combined primary/auxiliary tine assembly then being releasably secured to the tine carrier so as to be inter-changeable with a different assembly having a different arrangement of primary and auxiliary tines or with an ordinary primary tine only.

Likewise, whilst in the illustrated embodiment the primary and auxiliary tines are both rigid, either or both may be either rigid or resilient, and may be either rigidly or resiliently mounted, and whilst both the primary and auxiliary tines are straight, either or both may be curved.

Where several such sets of tines are provided at spaced positions along the length of the table 10, preferably each set of tines is equipped with one or more auxiliary tines. Thus, in the preferred embodiment, each of the primary tines 66b of the second set 62b are similarly provided with auxiliary tines 72b, the primary tines of said second set following the orbital path indicated at 70, whilst the auxiliary tines carried thereby are arranged to follow an adjustable orbital path indicated at 88.

In this way, by provision of auxiliary tines and/or positional adjustment thereof the action of the crop feed conveyor may be varied to suit differing conditions of crop. In particular it will be observed that the path followed by the tip of the auxiliary tine 72a sweeps over a somewhat different area of the table 10 so that the effect is quite different from that which would be achieved by merely increasing the number of primary tines. The effect is similar to that which would be obtained by providing more sets of primary tines orbiting along paths which overlap to a greater extent than normal, but this effect is achieved without the additional mechanical complication and expense which would be associated with the provision of a greater number of sets of primary tine at more closely spaced intervals along the length of the table.

CLAIMS:

1.  A crop feed conveyor of the kind including a supporting table (6) onto which the crop is delivered and a set (62) of primary tines (66) disposed above said table and arranged for reciprocatory movement in such a manner as to propel crop lengthwise along the table towards a discharge point (10), wherein one or more auxiliary tines (72) are provided on the set (62) of primary tines, the or each auxiliary tine (72) being disposed relative to the primary tines (66) in a position in which the tip thereof is spaced from the tips of the primary tines in the direction of movement of the tines.

2.  A crop feed conveyor according to Claim 1 wherein a plurality of such auxiliary tines (72) are provided on the set (62) of primary tines.

3.  A crop feed conveyor according to claim 1 or claim 2 wherein the or each auxiliary tine (72) is secured directly to one of the primary tines (66).

4.  A crop feed conveyor according to claim 1 or claim 2 wherein the or each auxiliary tine is secured directly to a tine carrier (64) on which the primary tines (66) are carried.

5.  A crop feed conveyor according to any one of the preceding claims wherein the or each auxiliary tine (72) is detachably mounted on the set of primary tines.

6.  A crop feed conveyor according to any one of the preceding claims wherein the or each auxiliary tine is mounted in such a manner as to be adjustable in position relative to the primary tines.

7.    A crop feed conveyor according to claim 6 wherein the or each auxiliary tine is angularly adjustable relative to the primary tines.

8.    A crop feed conveyor according to claim 6 or claim 7 wherein the or each auxiliary tine is adjustable in position longitudinally relative to the primary tines.

9.    A crop feed conveyor according to any one of claims 6 to 8 wherein the or each auxiliary tine is adjustable along its own length.

10.    A crop feed conveyor according to any one of claims 6 to 9 wherein the or each auxiliary tine is adjustable transversely relative to the primary tines.

11.    A crop feed conveyor according to any one of Claims 1 to 5 wherein the or each auxiliary tine is secured to the set of primary tines in fixed position relative thereto.

12.    A crop feed conveyor according to any one of the preceding claims wherein the orbital path (82) of travel of the tip of the or each auxiliary tine (72) is offset from the orbital path (68) of travel of the tips of its associated primary tines (66) in a direction heightwise of the table (6).

13.    A crop feed conveyor according to any one of the preceding claims wherein the orbital path (82) of travel of the tip of the or each auxiliary tine (77)is offset from the orbital path (68) of travel of the tips of its associated primary tines (66) in a direction lengthwise of the table (6).

14.  A crop feed conveyor according to any one of the preceding claims comprising a plurality of sets (62a,62b) of primary tines (66) spaced lengthwise of the table (6), each set (62a,62b) being disposed above said table and each being arranged for reciprocatory motion in such a manner as to propel crop lengthwise along the table towards the discharge point, one or more such auxiliary tines being provided on each of said said sets of primary tines.

15. A crop feed conveyor constructed and arranged substantially as hereinbefore described with reference to and as shown in the accompanying drawings.

FIG 1

0026003

FIG 2

European Patent Office

**EUROPEAN SEARCH REPORT**

Application number

EP 80 10 5736

| | DOCUMENTS CONSIDERED TO BE RELEVANT | | | CLASSIFICATION OF THE APPLICATION (Int Cl 3) |
|---|---|---|---|---|
| Category | Citation of document with indication, where appropriate, of relevant passages | Relevant to claim | | |
| X | US - A - 3 367 094 (HARWIG)<br>  * Column 2, lines 27-72; column 3, lines 1-36; figures 1-3 *<br><br>-- <br><br>GB - A - 938 002 (WELGER)<br>  * Page 2, lines 5-53; figures 1,2 *<br><br>--<br><br>FR - A - 2 400 321 (SPERRY RAND)<br>  * Page 4, lines 12 - end; page 5; page 6; page 7; figures 1-5 *<br><br>---- | 1-5, 11-13, 15<br><br><br>1,14<br><br><br>1,4-7, 14,15 | | A 01 F 15/10<br><br><br>TECHNICAL FIELDS SEARCHED (Int. Cl.3)<br><br>A 01 F |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-12-1980 | VERMANDER |

EPO Form 1503.1 06.78